# EUROPÄISCHE PATENTSCHRIFT

(11) **EP 4 111 074 B1**
(45) Veröffentlichungstag und Bekanntmachung des Hinweises auf die Patenterteilung: **08.01.2025**
(21) Anmeldenummer: 21701654.2
(22) Anmeldetag: 15.01.2021
(51) Int. Cl.: F16F 15/14

(54) **FLIEHKRAFTPENDEL MIT AXIAL AUSGESTELLTER ROLLENBAHN; SOWIE DREHMOMENTÜBERTRAGUNGSVORRICHTUNG**
CENTRIFUGAL PENDULUM HAVING A ROLLER TRACK PROJECTING AXIALLY OUTWARD, AND TORQUE TRANSMISSION DEVICE
PENDULE À FORCE CENTRIFUGE COMPORTANT UNE VOIE DE ROULEMENT EXPOSÉE AXIALEMENT ET DISPOSITIF DE TRANSMISSION DE COUPLE

(30) Priorität: 27.02.2020 DE 102020105174
(43) Veröffentlichungstag der Anmeldung: 04.01.2023
(73) Patentinhaber: Schaeffler Technologies AG & Co. KG, 91074 Herzogenaurach (DE)
(72) Erfinder: RUSCH, Alain, 67760 Gambsheim (FR); HÄSSLER, Martin, 76676 Graben-Neudorf (DE); LOTH, Martin, 77815 Bühl (DE); THERIOT, Laurent, 67000 Strasbourg (FR)
(86) Internationale Anmeldenummer: PCT/DE2021/100044
(87) Internationale Veröffentlichungsnummer: WO 2021/170168

(56) Entgegenhaltungen:
- WO-A1-2015/058766
- WO-A1-2018/145658
- DE-A1- 102016 214 469
- DE-A5- 112014 004 853

## Beschreibung

Die Erfindung betrifft ein Fliehkraftpendel für einen Kraftfahrzeugantriebsstrang, bevorzugt zum Einsatz in oder an einer Kupplung dieses Antriebsstranges, mit einem Träger und einer über zumindest einen Rollenkörper relativ zu dem Träger verschwenkbar gelagerten Pendelmasse, wobei der zumindest eine Rollenkörper mit einem ersten Wälzbereich in einer (ersten) Rollenbahn des Trägers aufgenommen ist und mit einem zweiten Wälzbereich in einer (zweiten) Rollenbahn der Pendelmasse aufgenommen ist. Des Weiteren betrifft die Erfindung eine Drehmomentübertragungsvorrichtung mit diesem Fliehkraftpendel.

Gattungsgemäße Fliehkraftpendel sind aus dem Stand der Technik bereits hinlänglich bekannt. In diesem Zusammenhang offenbart bspw. eine unter dem Aktenzeichen DE 10 2013 221 607.6 beim Deutschen Patent- und Markenamt angemeldete Idee ein Fliehkraftpendel mit zwei Pendelmassen, die mittels Pendelrollen an einem Trägerelement oder an zwei Trägerelementen entlang von Laufbahnen geführt sind.

Das Dokument WO 2015/058766 A1, welches als der nächstliegende Stand der Technik angesehen wird, offenbart die Merkmale des Oberbegriffs des Anspruchs 1.

Als ein Nachteil der aus dem Stand der Technik bekannten Ausführungen hat sich jedoch herausgestellt, dass die Rollenbahnen der bisher umgesetzten Varianten den im Betrieb auftretenden hohen Belastungen nur standhalten können, wenn sie durch einen relativ hohen Aufwand nachbearbeitet werden. Zudem besteht bei der Ausformung der Rollenbahnen bereits die Anforderung, einen entsprechenden Glattschnittanteil möglichst hoch auszubilden, sodass die entsprechenden Schnittflächen unmittelbar als Rollbahnen dienen können. Es wurde daher vorgeschlagen die entsprechenden Bestandteile des Trägers oder der Pendelmassen aus Blechen aus Kaltbandwerkstoff auszubilden, da diese prinzipiell eine geeignete Schnittqualität erlauben. Diese hat jedoch den Nachteil der relativ großen Kosten. Des Weiteren ist vorgeschlagen, die Blechstärke möglichst hoch zu wählen, da dadurch die Fläche der Rollenbahnen erhöht wird. Dies bewirkt jedoch nicht nur einen Anstieg der Gewichte des Fliehkraftpendels, sondern auch eine anspruchsvollere Herstellung, die mit zusätzlichen Maßnahmen umgesetzt werden muss. Auch werden die entsprechenden Bleche häufig vorher aufgekohlt, um eine hohe Einsatzhärtetiefe zu erreichen. Auch dies führt zu einer Steigerung des Herstellaufwands.

Es ist daher Aufgabe der vorliegenden Erfindung, die aus dem Stand der Technik bekannten Nachteile zu beheben und insbesondere ein Fliehkraftpendel zur Verfügung zu stellen, das einfacher herstellbar ist und dennoch möglichst verschleißfest ausgebildet ist.

Erfindungsgemäß gelöst wird diese Aufgabe durch ein Fliehkraftpendel gemäß Anspruch 1. Bevorzugte Ausführungsbeispiele sind in den abhängigen Ansprüchen dargelegt.

Insbesondere wird diese Aufgabe erfindungsgemäß dadurch gelöst, dass zumindest eine der beiden Rollenbahnen zum Teil oder vollständig durch einen axial umgeformten / ausgestellten Blechabschnitt derart gebildet ist, dass eine freie Kante des axial umgeformten Blechabschnitts von der nächstliegenden Pendelmasse weg weist. Durch eine derartige Ausformung der Rollenbahn /-en aus einem Blechabschnitt werden diese nicht mehr unmittelbar durch eine Schnittfläche, sondern durch eine seitliche Oberfläche des Trägers bzw. der Pendelmasse ausgebildet. Dadurch wird der Nachbearbeitungsbedarf der eigentlichen Schnittflächen deutlich reduziert. Zudem sind die Rollenbahnen möglichst breit ausgebildet, sodass sie noch verschleißfester sind.

Es ist von Vorteil, wenn der umgeformte Blechabschnitt einen durch die Blechumformung gekrümmten Bereich aufweist, mit dem ein Teilbereich des Rollenkörpers in Anlage bringbar ist, und über den der Teilbereich des Rollenkörpers vorzugsweise abwälzt.

Demnach ist es weiterhin von Vorteil, wenn der Blechabschnitt einen Lochleibungsbereich eines die Rollenbahn ausbildenden Durchgangsloches vollständig oder teilweise ausbildet. Die Erstreckung der Rollenbahn kann somit individuell durch den Blechabschnitt bestimmt werden.

In diesem Zusammenhang ist es auch zweckmäßig, wenn der Blechabschnitt eine radiale Innenseite und / oder eine radiale Außenseite des Lochleibungsbereichs bildet. Wenn sowohl die Innenseite als auch die Außenseite des Lochleibungsbereichs durch den Blechabschnitt gebildet ist, ist es weiter bevorzugt, wenn eine Summe aus der Länge des Blechabschnittes an der radialen Außenseite sowie der Länge des Blechabschnittes an der radialen Innenseite (Länge entspricht jeweils einer axialen Erstreckung entlang einer Wälzachse der Rollenkörper) kleiner als eine Breite (Breite entspricht radialer Weite) des Durchgangsloches ist.

Vorteilhaft ist es auch, wenn der Träger zwei Flanschelemente aufweist, wobei beide Flanschelemente je Rollenkörper eine diesen Rollenkörper aufnehmende, durch einen axial umgeformten Blechabschnitt mit ausgebildete (erste) Rollenbahn aufweisen. Dadurch wird die zur Verfügung stehende Führungsfläche / Wälzfläche weiter vergrö-ßert.

Der (jeweilige) Blechabschnitt ist vorteilhafterweise derart umgeformt, dass er im Wesentlichen senkrecht zu einem radial verlaufenden Scheibenbereich des Trägers oder der Pendelmasse verläuft. Unter im Wesentlichen senkrecht zu dem Scheibenbereich ist ein Winkel von 90° ± 10° relativ zu dem Scheibenbereich zu verstehen.

Des Weiteren ist es zweckmäßig, wenn ein Übergang zwischen dem Blechabschnitt und dem Scheibenbereich derart umgeformt ist, dass ein durch diesen Übergang gebildeter Radius kleiner als die Hälfte der Materialdicke des Scheibenbereiches ist. Als besonders zweckmäßig hat es sich herausgestellt, wenn dieser Radius in einem Kalibriervorgang in einer Prägewerkzeugfolge ausgebildet wird.

Weist der zumindest eine Rollenkörper eine konische Stützfläche auf, mittels der er an dem Träger oder der Pendelmasse axial abgestützt ist, vorzugsweise im durch die Blechumformung gekrümmten Bereich des umgeformten Blechabschnitts, wird dessen Zentrierung weiter optimiert.

Des Weiteren hat es sich als zweckmäßig herausgestellt, wenn die (zweite) Rollenbahn der Pendelmasse länger als die (erste) Rollenbahn des Trägers ausgebildet ist. Dadurch ergeben sich möglichst lange Wälzflächen für die Rollenkörper.

Sind / ist die Rollenbahn des Trägers und/oder die Rollenbahn der Pendelmasse einsatzgehärtet, wird die Robustheit weiter gesteigert.

Des Weiteren betrifft die Erfindung eine Drehmomentübertragungsvorrichtung, vorzugsweise in Form einer Kupplung, für einen Kraftfahrzeugantriebsstrang, mit einem erfindungsgemäßen Fliehkraftpendel nach zumindest einer der zuvor beschriebenen Ausführungen und einer mit dem Träger des Fliehkraftpendels verbundenen Kupplungsscheibe.

Mit anderen Worten ausgedrückt, ist somit erfindungsgemäß ein Fliehkraftpendel mit gezogenen / ausgestallten Rollenbahnen realisiert. Um den Verschleiß bei einem Fliehkraftpendel, insbesondere im Zweiflansch-Design, insbesondere an einer Kupplungsscheibe befestigt, zu verringern, wird vorgeschlagen, dass die Bahn der Pendelmasse und/oder des Flansches bzw. der Flansche aus der umgeformten Oberfläche eines Blechs besteht.

Die Erfindung wird nun nachfolgend anhand von Figuren näher erläutert, in welchem Zusammenhang auch verschiedene Ausführungsbeispiele gezeigt sind.

Es zeigen:
- Fig. 1: eine Detailansicht eines erfindungsgemäßen, in Längsrichtung geschnittenen Fliehkraftpendels nach einem ersten Ausführungsbeispiel, wobei ein in Rollenbahnen eines Trägers sowie einer Pendelmasse gelagerter Rollenkörper veranschaulicht ist,
- Fig. 2: eine Vorderansicht eines erfindungsgemäßen Fliehkraftpendels nach Fig. 1 mit einer dem Längsschnitt nach Fig. 1 kennzeichnenden Schnittlinie I-I,
- Fig. 3: eine Längsschnittdarstellung des Fliehkraftpendels als Vollschnitt,
- Fig. 4: eine perspektivische Darstellung eines Fliehkraftpendels nach den Fign. 1 bis 3, wobei mehrere, jeweils eine Rollenbahn ausbildende Blechabschnitte eines Flanschelementes des Fliehkraftpendels zu erkennen sind,
- Fig. 5: eine Detailansicht des in Fig. 4 mit V gekennzeichneten Bereiches,
- Fig. 6: eine Detailansicht des die Blechabschnitte nach Fig. 5 aufweisenden Bereichs des Flanschelementes,
- Fig. 7: eine Vorderansicht eines in dem Fliehkraftpendel der Fig. 1 eingesetzten Flanschelementes,
- Fign. 8a und 8b: zwei Längsschnittdarstellungen (mit und ohne Umfangslinien) des Flanschelementes nach Fig. 7 entlang der in Fig. 7 mit VIII-VIII gekennzeichneten Schnittlinie,
- Fig. 9: eine Bilderfolge zur Darstellung eines Herstellungsvorgangs einer in dem Flanschelement nach Fig. 7 umgesetzten Rollenbahn, wobei mit den vier Teildarstellungen die unterschiedlichen Herstellschritte zu erkennen sind,
- Fig. 10: eine Bilderfolge zur Darstellung der Herstellung eines Flanschelementes nach einem zweiten Ausführungsbeispiel, bei dem nur eine radiale Außenseite einer Rollenbahn mit dem axial ausgestellten Blechabschnitt versehen ist, sowie
- Fig. 11: eine Längsschnittdarstellung einer Drehmomentübertragungsvorrichtung, in der das Fliehkraftpendel der Fign. 1 bis 5 einsetzbar ist.

Die Figuren sind lediglich schematischer Natur und dienen daher ausschließlich dem Verständnis der Erfindung. Die gleichen Elemente sind mit denselben Bezugszeichen versehen.

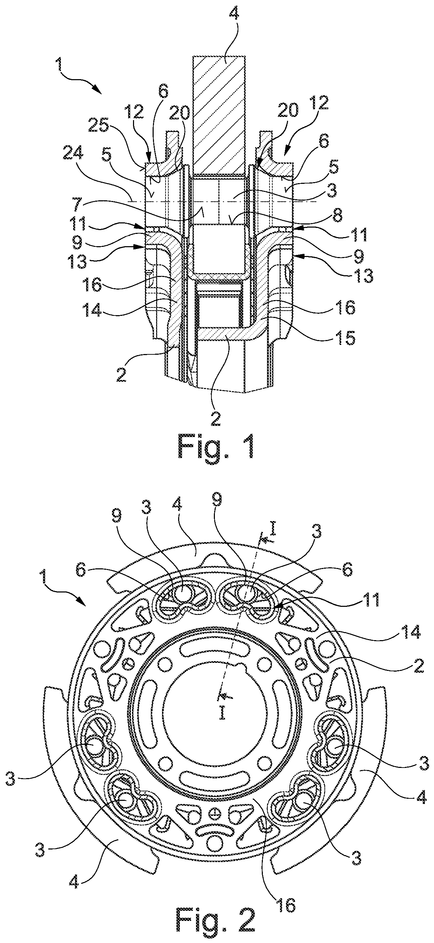

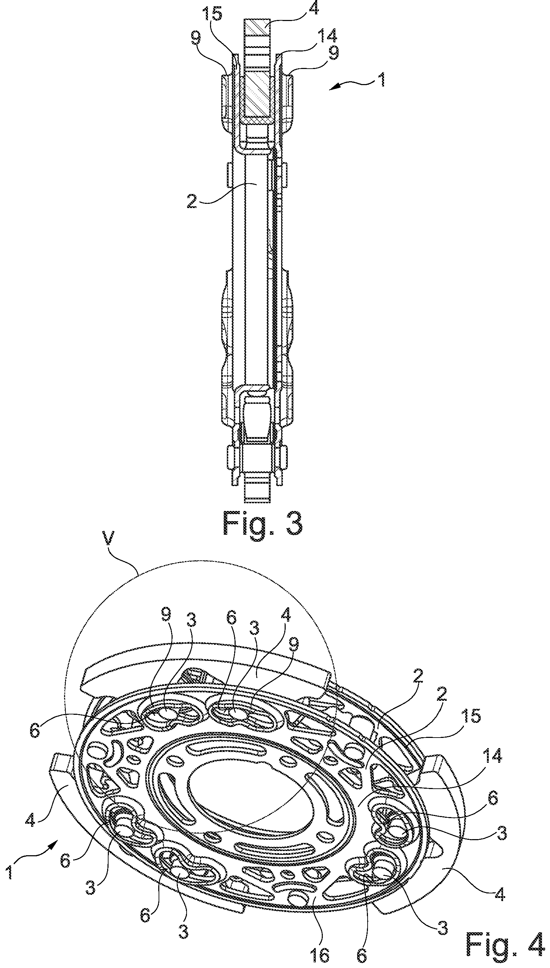

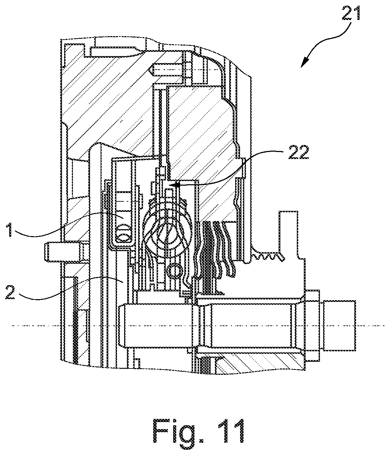

Mit Fig.11 ist ein bevorzugter Einsatzbereich eines nachfolgend näher beschriebenen erfindungsgemäßen Fliehkraftpendels 1 veranschaulicht. Das Fliehkraftpendel 1 ist in dieser Fig.11 schematisch gezeigt; seine nähere Ausbildung geht dann aus den Fign. 1 bis 10 hervor. Das Fliehkraftpendel 1 ist in Fig. 11 drehfest an einer Kupplungsscheibe 22 einer Drehmomentübertragungsvorrichtung 21 angebracht. Die Drehmomentübertragungsvorrichtung 21 ist als eine Kupplung, nämlich eine Reibungskupplung, realisiert. Das Fliehkraftpendel 1 dient typischerweise zum Tilgen einer Torsionsschwingung in einem Antriebsstrang eines Kraftfahrzeuges und ist samt der Drehmomentübertragungsvorrichtung 21 vorzugsweise zwischen einer Verbrennungskraftmaschine und einem Getriebe eingesetzt.

Das Fliehkraftpendel 1, wie mit den Fign. 1 bis 3 in Zusammenhang mit einem ersten Ausführungsbeispiel zu erkennen, weist einen Träger 2 auf. Der Träger 2 ist mehrteilig ausgeführt. Der Träger 2 weist zwei Flanschelemente 14, 15 auf, die jeweils eine erste Rollenbahn 6 für einen Rollenkörper 3 ausbilden. Die Flanschelemente 14 und 15 bilden gemäß Fig. 2 mehrere in Umfangsrichtung verteilt angeordnete erste Rollenbahnen 6 aus. Jede erste Rollenbahn 6 des ersten Flanschelementes 14 fluchtet mit einer ersten Rollenbahn 6 des zweiten Flanschelementes 15 axial / in axialer Richtung (d.h. entlang einer Wälzachse 24 des Rollenkörpers 3). Die jeweilige erste Rollenbahn 6 verläuft in Umfangsrichtung des Flanschelementes 14, 15 im Wesentlichen nierenförmig und ist durch ein axiales Durchgangsloch 11 gebildet. In jeder ersten Rollenbahn 6 eines Flanschelementes 14, 15 läuft der Rollenkörper 3 mit einem ersten Wälzbereich 5.

Axial zwischen den die ersten Rollenbahnen 6 ausbildenden Bereichen der Flanschelemente 14, 15 ist eine Pendelmasse 4 aufgenommen, die über die Rollenkörper 3 relativ zu dem Träger 2 in seiner Pendel- / Schwenkbewegung geführt ist. Hierzu weist die Pendelmasse 4 eine zweite Rollenbahn 8 auf. Der Rollenkörper 3 ist in seinem axialen Bereich zwischen den ersten Rollenbahnen 6 unter Ausbildung eines zweiten Wälzbereiches 7 in dieser zweiten Rollenbahn 8 aufgenommen. Die Pendelmasse 4 ist somit über die Rollenkörper 3 und durch deren Aufnahme in den Rollenbahnen 6, 8 im Fliehkraftfeld im Betrieb der Drehmomentübertragungsvorrichtung 21 schwenkbar geführt. Mit Fig. 2 ist zudem zu erkennen, dass je Pendelmasse 4 zwei Rollenkörper 3 vorhanden sind, wobei diese beiden einer Pendelmasse 4 zugeordneten Rollenkörper 3 in einer zusammenhängenden ersten Rollenbahn 6 der Pendelmasse 4 laufen. Typischerweise sind mehrere, hier drei, in Umfangsrichtung verteilt angeordnete Pendelmassen 4 auf diese Weise schwenkbar an dem Träger 2 aufgenommen.

Erfindungsgemäß ist jede der ersten Rollenbahnen 6 durch einen axial umgelegten / umgeformten / ausgestellten Blechabschnitt 9 der Flanschelemente 14, 15 derart gebildet, dass eine freie Kante bzw. Schnittkante des axial umgeformten Blechabschnitts 9 von der nächstliegenden Pendelmasse 4 weg weist. Dies ist mit den unterschiedlichen Figuren 1 bis 9 in Bezug auf das erste Ausführungsbeispiel veranschaulicht. Die beiden aus Metallblech hergestellten Flanschelemente 14, 15 sind im Bereich ihrer ersten Rollenbahnen 6 somit auf gleiche Weise mit mehreren axial umgeformten Blechabschnitten 9 versehen, die unmittelbar die erste Rollenbahn 6 bilden, wobei die freien Kanten bzw. die Schnittkanten der umgeformten Blechabschnitte 9 der beiden Flanschelemente 14, 15 von einander weg weisen.

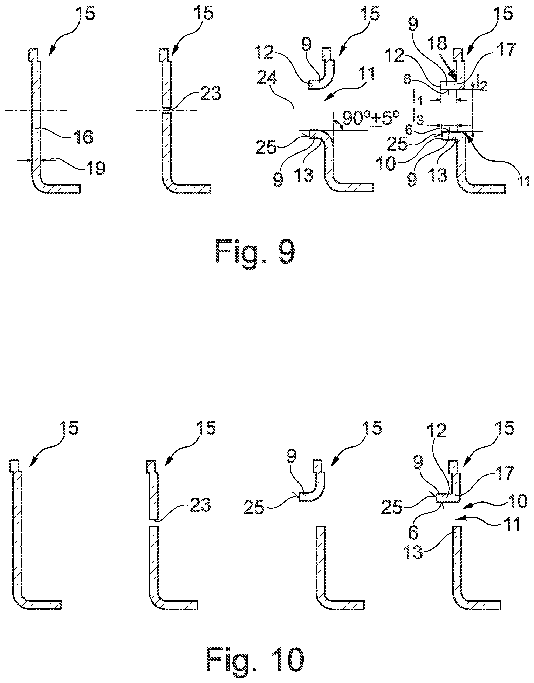

Dieser Umformvorgang wird in Verbindung mit Fig. 9 exemplarisch anhand des zweiten Flanschelementes 15 detailliert dargestellt, wobei dieser Vorgang selbstverständlich auch für das erste Flanschelement 14 zutrifft. Demnach wird zunächst ein mit einer bestimmten Materialdicke 19 versehenes Metallblech / Stahlblech, vorzugsweise ein Warmband, zur Verfügung gestellt, das im Anschluss daran derart bearbeitet wird, dass der axial vorspringende Blechabschnitt 9 entsteht. Zunächst wird ein kleines durchgängiges Loch 23 (vorzugsweise durch ein Stanzen oder Schneiden) gebildet. Anschließend wird der Blechabschnitt 9 ausgestellt, d.h. so axial verformt, dass ein Durchgangsloch 11 entsteht, das zumindest zu seiner radialen Außenseite 12 sowie zu einer radialen Innenseite 13 die erste Rollenbahn 6 ausbildet. In einem abschließenden Kalibriervorgang wird die Länge des Blechabschnittes 9 an der Außenseite 12 sowie an der Innenseite 13 nochmals erhöht. Dabei entsteht ein Radius 18 an einem Übergang 17 zwischen einem radial verlaufenden Scheibenbereich 16 des zweiten Flanschelementes 15 und dem Blechabschnitt 9, der kleiner als die Hälfte der Materialdicke 19 ist.

Mit Fig. 9 ist in dem fertig ausgebildeten Zustand gemäß der rechtesten Teildarstellung im Schnitt auch zu erkennen, dass die Summe aus der Länge / axialen Erstreckung I1 des Blechabschnittes 9 an der radialen Außenseite 12 und der Länge / axialen Erstreckung I3 des Blechabschnittes 9 an der radialen Innenseite 13 kleiner als die radiale Erstreckung I2 (/ Breite / Weite) des Durchgangsloches 11 (auch als Bahnöffnung bezeichnet) ist.

Somit entsteht an dem jeweiligen Flanschelement 14, 15 ein einteilig ausgebildeter Blechabschnitt 9 in Form eines Blechnapfes, der in axialer Richtung verläuft / ausgestellt ist. Seine zuvor stanztechnisch oder schneidtechnisch bearbeitete Schnittkante 25 ist somit axial ausgerichtet und somit radial beabstandet / nicht in Reibkontakt mit dem Rollenkörper 3 und weist von der nächstliegenden bzw. der zu führenden Pendelmasse 4 weg. Insbesondere weist der umgeformte Blechabschnitt einen durch die Blechumformung gekrümmten Bereich auf, mit dem ein Teilbereich des Rollenkörpers in Anlage bringbar ist, und über den der Teilbereich des Rollenkörpers vorzugsweise abwälzt.

Mit Fig. 1 wird zudem deutlich, dass der Rollenkörper 3 in einem Bereich zwischen jeder ersten Rollenbahn 6 und der Pendelmasse 4 eine konisch ausgeformte Stützfläche 20 aufweist, die axial an einem Flanschelement 14, 15 anliegen, vorzugsweise im durch die Blechumformung gekrümmten Bereich des jeweiligen umgeformten Blechabschnitts 9, und somit den Rollenkörper 3 in dem axialen Zwischenraum zwischen den Flanschelementen 14, 15 (axial) zentrieren.

Zudem ist ersichtlich, dass jede erste Rollenbahn 6 eine kleinere Länge / axial kürzer und somit eine kleinere Auflagefläche zu dem Rollenkörper 3 hin ausbildet als die zweite Rollenbahn 8.

Des Weiteren ist die jeweilige erste und zweite Rollenbahn 6, 8 einsatzgehärtet.

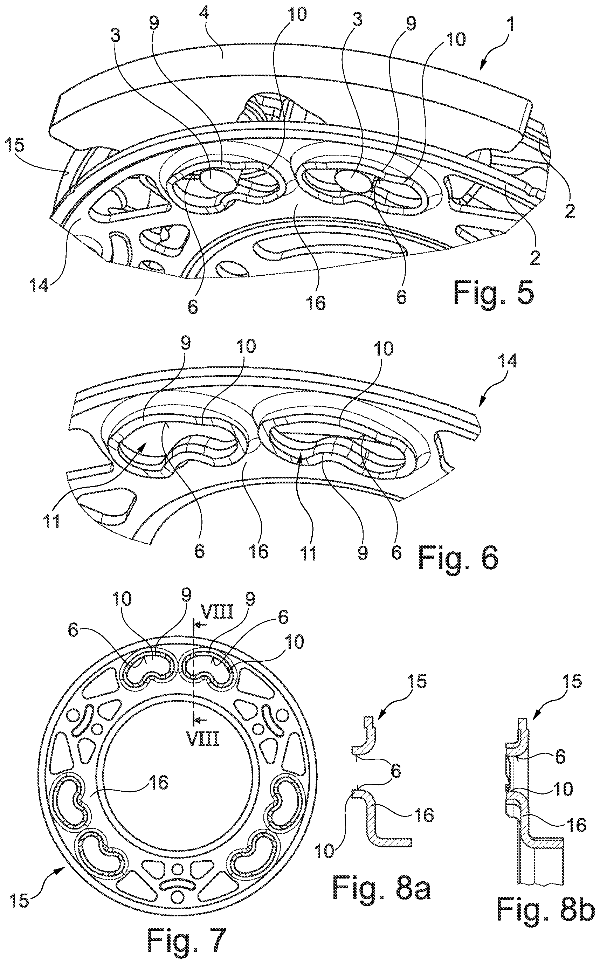

Wie in Fig. 5 zu erkennen, verläuft dieser Blechabschnitt 9 vorzugsweise um den gesamten Umfang des das Durchgangsloch 11 ausbildenden Lochleibungsbereiches 10 herum. Alternativ, wie in Verbindung mit Fig. 10 veranschaulicht, ist es jedoch prinzipiell auch möglich nur einen Umfangsbereich dieses Durchgangslochs 11 / dieses Lochleibungsbereichs 10 mit dem Blechabschnitt 9 zu versehen, dann vorzugsweise den Bereich zu der radialen Außenseite 12 hin.

In diesem Zusammenhang sei der Vollständigkeit halber auch erwähnt, dass in weiteren Ausführungen die Pendelmasse 4 alternativ oder zusätzlich mit einem derartigen Blechabschnitt 9 umgesetzt ist. Die Pendelmasse 4 ist dann ebenfalls vollständig aus einem Metallblech / Stahlblech, vorzugsweise Warmband, ausgeformt.

Mit anderen Worten ausgedrückt, besteht die erfinderische Lösung der Aufgabe in der Nutzung der Blechoberfläche als Rollenbahn 6 (anstatt der Schnittkante 25). Die Blechoberfläche besitzt grundsätzlich Qualitäten, wodurch die Maßnahmen sich wie folgt ändern: Es ist keine enge Schnittluft im Werkzeug erforderlich, da die Schnittkantenqualität keine Rolle mehr spielt. Die Bleche (14, 15, 4) sind vorzugsweise durch ein Warmband ausgeformt. Die Blechstärke kann dünner ausgewählt werden, da die Bahnbreite nicht mehr von der Blechstärke abhängig ist. Auf ein Voraufkohlen der Bleche kann verzichtet werden, da die Erhöhung der Rollfläche die Anforderung an die Festigkeit senkt.

Somit betrifft die Erfindung folgende Punkte:
1) Fliehkraftpendel 1 bestehend aus Rollen 3 und aus aus Blech geformten Träger 2 und Pendelmassen 4, wobei die Bahn 6, 8 der Pendelmasse 4 oder des Trägers 2 aus der umgeformten Oberfläche des Bleches besteht.
2) Fliehkraftpendel 1 bestehend aus Rollen 3 und aus aus Blech geformten Träger 2 und Pendelmassen 4, wobei die Blechschnittkante 25 keinen Kontakt zu Rolle 3 hat und dadurch keine Funktionsfläche ist.
3) Fliehkraftpendel 1 nach Punkt 1 oder 2, wobei die Bahnen 6, 8 aus dem umgebogenen Blechteil, was ursprünglich im Bahnbereich war, gebildet sind.
4) Fliehkraftpendel 1 nach Punkt 3, wobei die Bahnen 6, 8 in einem Winkel von 90°±10° zum restlichen Teil aufgebogen sind.
5) Fliehkraftpendel 1 nach Punkt 3, wobei die Bahnen 6, 8 in einer Prägewerkzeugfolge kalibriert werden. Dadurch wird das Material im Bereich der Ecke verdrängt, der Radius 18 ist deswegen kleiner als die halbe Materialstärke 19.
6) Fliehkraftpendel 1 nach Punkt 4, wobei die Rollen 3 eine der zum Bahnaufstellwinkel angepasste Konizität 20 aufweisen. Dadurch ist eine Selbstzentrierung erzielt.
7) Fliehkraftpendel 1 nach Punkt 3, wobei die Bahn 6, 8 in der Mitte eine größere Fläche als auf den Seiten aufweist. Dadurch ist der mittlere Bereich mit der höchsten Rollbelastung gegen zu hohe Pressungen geschützt.
8) Fliehkraftpendel 1 nach Punkt 3, wobei die Summe aus oberer und unterer axialer Erstreckung der Bahn 6, 8 kleiner als die Bahnöffnung ist (I1+I3<I2 nach Fig. 9).
9) Fliehkraftpendel 1 nach Punkt 3, wobei nur die obere Seite der Bahn 6, 8 umgebogen ist. Die Rolle 3 rollt nicht auf unterer Seite und braucht deswegen keine gebogene Bahn an dieser Stelle.
10) Fliehkraftpendel 1 nach Punkt 3, wobei die Bahn 6, 8 einsatzgehärtet ist.

### Bezugszeichenliste

- 1: Fliehkraftpendel
- 2: Träger
- 3: Rollenkörper
- 4: Pendelmasse
- 5: erster Wälzbereich
- 6: erste Rollenbahn
- 7: zweiter Wälzbereich
- 8: zweite Rollenbahn
- 9: Blechabschnitt
- 10: Lochleibungsbereich
- 11: Durchgangsloch
- 12: Außenseite
- 13: Innenseite
- 14: erstes Flanschelement
- 15: zweites Flanschelement
- 16: Scheibenbereich
- 17: Übergang
- 18: Radius
- 19: Materialdicke
- 20: Stützfläche
- 21: Drehmomentübertragungsvorrichtung
- 22: Kupplungsscheibe
- 23: Loch
- 24: Wälzachse
- 25: Schnittkante

## Patentansprüche

1. Fliehkraftpendel (1) für einen Kraftfahrzeugantriebsstrang, mit einem Träger (2) und einer über zumindest einen Rollenkörper (3) relativ zu dem Träger (2) verschwenkbar gelagerten Pendelmasse (4), wobei der zumindest eine Rollenkörper (3) mit einem ersten Wälzbereich (5) in einer Rollenbahn (6) des Trägers (2) aufgenommen ist und mit einem zweiten Wälzbereich (7) in einer Rollenbahn (8) der Pendelmasse (4) aufgenommen ist, **dadurch gekennzeichnet, dass** zumindest eine der beiden Rollenbahnen (6, 8) zum Teil oder vollständig durch einen axial umgeformten Blechabschnitt (9) derart gebildet ist, dass eine freie Kante des axial umgeformten Blechabschnitts (9) von der nächstliegenden Pendelmasse (4) weg weist.

2. Fliehkraftpendel (1) nach Anspruch 1, **dadurch gekennzeichnet, dass** der umgeformte Blechabschnitt (9) einen durch die Blechumformung gekrümmten Bereich aufweist, mit dem ein Teilbereich des Rollenkörpers (3) in Anlage bringbar ist, und über den der Teilbereich des Rollenkörpers (3) vorzugsweise abwälzt.

3. Fliehkraftpendel (1) nach Anspruch 1 oder 2, **dadurch gekennzeichnet, dass** der Blechabschnitt (9) einen Lochleibungsbereich (10) eines die Rollenbahn (6, 8) ausbildenden Durchgangsloches (11) vollständig oder teilweise ausbildet.

4. Fliehkraftpendel (1) nach Anspruch 3, **dadurch gekennzeichnet, dass** der Blechabschnitt (9) eine radiale Außenseite (12) und / oder eine radiale Innenseite (13) des Lochleibungsbereichs (10) bildet.

5. Fliehkraftpendel (1) nach einem der Ansprüche 1 bis 4, **dadurch gekennzeichnet, dass** der Träger (2) zwei Flanschelemente (14, 15) aufweist, wobei beide Flanschelemente (14, 15) je Rollenkörper (3) eine diesen Rollenkörper (3) aufnehmende, durch einen axial umgeformten Blechabschnitt (9) mit ausgebildete Rollenbahn (6) aufweisen.

6. Fliehkraftpendel (1) nach Anspruch 5, **dadurch gekennzeichnet, dass** die freien Kanten der umgeformten Blechabschnitte (9) der beiden Flanschelemente (14, 15) von einander weg weisen.

7. Fliehkraftpendel (1) nach einem der Ansprüche 1 bis 6, **dadurch gekennzeichnet, dass** der Blechabschnitt (9) derart umgeformt ist, dass dieser im Wesentlichen senkrecht zu einem radial verlaufenden Scheibenbereich (16) des Trägers (2) oder der Pendelmasse (4) verläuft.

8. Fliehkraftpendel (1) nach Anspruch 7, **dadurch gekennzeichnet, dass** ein Übergang (17) zwischen dem Blechabschnitt (9) und dem Scheibenbereich (16) derart umgeformt ist, dass ein durch diesen Übergang (17) gebildeter Radius (18) kleiner als die Hälfte der Materialdicke (19) des Scheibenbereiches (16) ist.

9. Fliehkraftpendel (1) nach einem der Ansprüche 1 bis 8, **dadurch gekennzeichnet, dass** der zumindest eine Rollenkörper (3) eine konische Stützfläche (20) aufweist, mittels der er an dem Träger (2) oder der Pendelmasse (4) axial abgestützt ist, vorzugsweise im durch die Blechumformung gekrümmten Bereich des umgeformten Blechabschnitts (9).

10. Fliehkraftpendel (1) nach einem der Ansprüche 1 bis 9, **dadurch gekennzeichnet, dass** die Rollenbahn (8) der Pendelmasse (4) länger als die Rollenbahn (6) des Trägers (2) ausgebildet ist.

11. Fliehkraftpendel (1) nach einem der Ansprüche 1 bis 10, **dadurch gekennzeichnet, dass** die Rollenbahn (5) des Trägers (2) und / oder die Rollenbahn (8) der Pendelmasse (4) einsatzgehärtet sind / ist.

12. Drehmomentübertragungsvorrichtung (21) für einen Kraftfahrzeugantriebsstrang, mit einem Fliehkraftpendel (1) nach einem der Ansprüche 1 bis 11 und einer mit dem Träger (2) des Fliehkraftpendels (1) verbundenen Kupplungsscheibe (22).

## Claims

1. A centrifugal pendulum (1) for a motor vehicle drive train, having a carrier (2) and a pendulum mass (4) pivotably mounted relative to the carrier (2) via at least one roller body (3), wherein the at least one roller body (3) is received with a first rolling region (5) in a roller track (6) of the carrier (2) and is received with a second rolling region (7) in a roller track (8) of the pendulum mass (4), **characterized in that** at least one of the two roller tracks (6, 8) is partially or completely formed by an axially formed sheet-metal portion (9) such that a free edge of the axially formed sheet-metal portion (9) points away from the nearest pendulum mass (4).

2. The centrifugal pendulum (1) according to claim 1, **characterized in that** the formed sheet-metal portion (9) has a region which is curved by the sheet metal forming process and with which a subregion of the roller body (3) can be brought into contact and over which the subregion of the roller body (3) preferably rolls.

3. The centrifugal pendulum (1) according to claim 1 or 2, **characterized in that** the sheet-metal portion (9) completely or partially forms a hole bearing region (10) of a through-hole (11) forming the roller track (6, 8).

4. The centrifugal pendulum (1) according to claim 3, **characterized in that** the sheet-metal portion (9) forms a radial outer side (12) and/or a radial inner side (13) of the hole bearing region (10).

5. The centrifugal pendulum (1) according to any one of claims 1 to 4, **characterized in that** the carrier (2) has two flange elements (14, 15), wherein the two flange elements (14, 15) have a roller track (6) for each roller body (3) which receives said roller body (3) and is formed by an axially formed sheet-metal portion (9).

6. The centrifugal pendulum (1) according to claim 5, **characterized in that** the free edges of the formed sheet-metal portions (9) of the two flange elements (14, 15) point away from each other.

7. The centrifugal pendulum (1) according to any one of claims 1 to 6, **characterized in that** the sheet-metal portion (9) is formed such that it extends substantially perpendicular to a radially extending disk region (16) of the carrier (2) or the pendulum mass (4).

8. The centrifugal pendulum (1) according to claim 7, **characterized in that** a transition (17) between the sheet-metal portion (9) and the disk region (16) is formed such that a radius (18) formed by said transition (17) is smaller than half the material thickness (19) of the disk region (16).

9. The centrifugal pendulum (1) according to any one of claims 1 to 8, **characterized in that** the at least one roller body (3) has a conical support surface (20) by means of which the roller body is axially supported on the carrier (2) or the pendulum mass (4), preferably in the region of the formed sheet-metal portion (9) curved by the sheet metal forming process.

10. The centrifugal pendulum (1) according to any one of claims 1 to 9, **characterized in that** the roller track (8) of the pendulum mass (4) is longer than the roller track (6) of the carrier (2).

11. The centrifugal pendulum (1) according to any one of claims 1 to 10, **characterized in that** the roller track (5) of the carrier (2) and/or the roller track (8) of the pendulum mass (4) is/are case-hardened.

12. A torque transmission device (21) for a motor vehicle drive train, having a centrifugal pendulum (1) according to any one of claims 1 to 11 and a clutch disk (22) connected to the carrier (2) of the centrifugal pendulum (1).

## Revendications

1. Pendule à force centrifuge (1) pour une transmission de véhicule automobile, comportant un support (2) et une masse pendulaire (4) qui est montée pivotante par rapport au support (2) par l'intermédiaire d'au moins un corps de rouleau (3), dans lequel l'au moins un corps de rouleau (3) est logé avec une première zone de roulement (5) dans une voie de roulement (6) du support (2) et est logé avec une seconde zone de roulement (7) dans une voie de roulement (8) de la masse pendulaire (4), **caractérisé en ce qu'**au moins l'une des deux voies de roulement (6, 8) est formée en partie ou en totalité par une section de tôle (9) formée axialement de façon qu'un bord libre de la section de tôle (9) formée axialement pointe à l'opposé de la masse pendulaire (4) la plus proche.

2. Pendule à force centrifuge (1) selon la revendication 1, **caractérisé en ce que** la section de tôle (9) formée présente une zone courbée par le formage de la tôle, avec laquelle une zone partielle du corps de rouleau (3) peut être mise en contact, et sur laquelle la zone partielle du corps de rouleau (3) roule de préférence.

3. Pendule à force centrifuge (1) selon la revendication 1 ou 2, **caractérisé en ce que** la section de tôle (9) forme entièrement ou partiellement une zone d'embrasure de trou (10) d'un trou traversant (11) formant la voie de roulement (6, 8).

4. Pendule à force centrifuge (1) selon la revendication 3, **caractérisé en ce que** la section de tôle (9) forme un côté extérieur radial (12) et/ou un côté intérieur radial (13) de la zone d'embrasure de trou (10).

5. Pendule à force centrifuge (1) selon l'une quelconque des revendications 1 à 4, **caractérisé en ce que** le support (2) présente deux éléments bride (14, 15), dans lequel les deux éléments bride (14, 15) présentent pour chaque corps de rouleau (3) une voie de roulement (6) qui reçoit ce corps de rouleau (3) et est formée par une section de tôle (9) formée axialement.

6. Pendule à force centrifuge (1) selon la revendication 5, **caractérisé en ce que** les bords libres des sections de tôle (9) formées des deux éléments bride (14, 15) sont opposés l'un à l'autre.

7. Pendule à force centrifuge (1) selon l'une quelconque des revendications 1 à 6, **caractérisé en ce que** la section de tôle (9) est formée de façon à s'étendre essentiellement perpendiculairement à une zone de disque (16) s'étendant radialement du support (2) ou de la masse pendulaire (4).

8. Pendule à force centrifuge (1) selon la revendication 7, **caractérisé en ce qu'**une transition (17) entre la section de tôle (9) et la zone de disque (16) est formée de façon qu'un rayon (18) formé par cette transition (17) est inférieur à la moitié de l'épaisseur de matériau (19) de la zone de disque (16).

9. Pendule à force centrifuge (1) selon l'une quelconque des revendications 1 à 8, **caractérisé en ce que** l'au moins un corps de rouleau (3) présente une surface d'appui conique (20), au moyen de laquelle il s'appuie axialement sur le support (2) ou sur la masse pendulaire (4), de préférence dans la zone de la section de tôle (9) formée qui est courbée par le formage de la tôle.

10. Pendule à force centrifuge (1) selon l'une quelconque des revendications 1 à 9, **caractérisé en ce que** la voie de roulement (8) de la masse pendulaire (4) est conçue plus longue que la voie de roulement (6) du support (2).

11. Pendule à force centrifuge (1) selon l'une quelconque des revendications 1 à 10, **caractérisé en ce que** la voie de roulement (5) du support (2) et/ou la voie de roulement (8) de la masse pendulaire (4) sont cémentées.

12. Dispositif de transmission de couple (21) pour une chaîne cinématique de véhicule automobile, comportant un pendule à force centrifuge (1) selon l'une quelconque des revendications 1 à 11 et un disque d'embrayage (22) relié au support (2) du pendule à force centrifuge (1).
